(19) Europäisches Patentamt
European Patent Office
Office européen des brevets

(11) Veröffentlichungsnummer : **0 268 727 B1**

(12) # EUROPÄISCHE PATENTSCHRIFT

(45) Veröffentlichungstag der Patentschrift : **24.07.91 Patentblatt 91/30**

(51) Int. Cl.$^5$ : **C08G 18/48,** C09J 175/08

(21) Anmeldenummer : **87102363.6**

(22) Anmeldetag : **19.02.87**

(54) **Härtbares Klebmittel.**

(30) Priorität : **27.11.86 DE 3640510**

(43) Veröffentlichungstag der Anmeldung : **01.06.88 Patentblatt 88/22**

(45) Bekanntmachung des Hinweises auf die Patenterteilung : **24.07.91 Patentblatt 91/30**

(84) Benannte Vertragsstaaten : **BE DE FR GB IT NL**

(56) Entgegenhaltungen : **FR-A- 1 225 713**

(73) Patentinhaber : **Th. Goldschmidt AG**
**Goldschmidtstrasse 100 Postfach 101461**
**W-4300 Essen 1 (DE)**

(72) Erfinder : **Esselborn, Eberhard**
**Pilotystrase 21**
**W-4300 Essen (DE)**
Erfinder : **Fock, Jürgen, Dr.**
**Mörsenbroicher Weg 114**
**W-4000 Düsseldorf (DE)**
Erfinder : **Schedlitzki, Dietmar, Dr.**
**Potthoffs Börde 18**
**W-4300 Essen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Härtbares Klebmittel auf Polyol/Polyisocyanatbasis, welches gegebenenfalls übliche Zusatzstoffe enthält.

Härtbare Klebmittel auf Polyol/Polyisocyanatbasis werden in großem Umfang als reaktive Klebmittel verwendet. Dabei ist es möglich, durch entsprechende Auswahl der Polyol- und/oder der Polyisocyanatkomponente die anwendungstechnischen Eigenschaften des Klebmittels den jeweiligen Anforderungen anzupassen. Von den an ein derartiges Klebmittel zu stellenden Anforderungen sind insbesondere die Adhäsivität des Klebmittels auf den zu verklebenden Oberflächen und die Eigenschaften, insbesondere die mechanischen Eigenschaften der Klebfugen, von Bedeutung. Zur Gewährleistung einer guten Verklebung muß das Klebmittel an den zu verklebenden Oberflächen der Gegenstände ausreichend haften. Das die Klebfuge bildende ausgehärtete Klebmittel muß eine gewisse Elastizität aufweisen und gegen chemische und physikalische Beanspruchungen eine genügende Widerstandsfähigkeit haben. In den meisten Fällen soll das ausgehärtete Klebmittel gegen die Einwirkung von Wasser oder Wasserdampf beständig sein. Das härtbare Klebmittel soll mit der dem Anwendungszweck angepaßten Geschwindigkeit aushärten.

Diese Anorderungen werden von Klebmitteln auf Polyol/Polyisocyanatbasis in besonderem Maße erfüllt. Jedoch treten bei bestimmten zu verklebenden Substraten Probleme der Adhäsivität auf. Besonders schwierig sind dabei bestimmte Kunststoffe, insbesondere auf Basis Polystyro, zu verkleben.

Der vorliegenden Erfindung liegt die Aufgabe zugrunde, ein härtbares Klebmittel auf Polyol/Polyisocyanatbasis zu finden, welches zur Verklebung von Gegenständen aus Polystyrol, insbesondere schlagfestem Polystyrol, geeignet ist.

Überraschenderweise wurde gefunden, daß hierfür ein Klebmittel besonders geeignet ist, welches dadurch gekennzeichnet ist, daß es durch Vermischen einer Polyolkomponente, bestehend aus

$a_{1)}$ 10 bis 80 Gew.-% Polyether der allgemeinen Formel

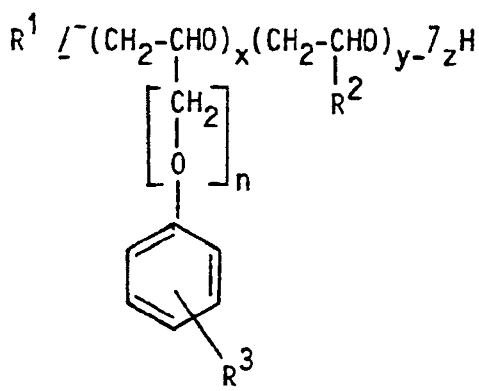

wobei $R^1$ ein z-wertiger Alkoxyrest, $R^2$ ein Wasserstoff- oder Alkylrest mit bis zu 12 Kohlenstoffatomen, $R^3$ ein Wasserstoff- oder Alkylrest mit 1 bis 4 Kohlenstoffatomen, n = 0 oder 1, z = 2, 3 oder 4, x, y ganze Zahlen $\geqq$ 1, mit der Maßgabe, daß x : y = 0,3 bis 2,5 und das Molekulargewicht des Polyethers 330 bis 900 beträgt,

$a_{2)}$ 20 bis 90 Gew.-% Polyether der vorgenannten Formel, wobei z = 2 oder 3 ist und das Molekulargewicht des Polyethers 950 bis 3000 beträgt, und gegebenenfalls

$a_{3)}$ bis zu 60 Gew.-% an sich bekannter, mit den Polyethern $a_{1)}$ und $a_{2)}$ mischbarer Polyole, wobei die Summe von $a_{1)}$, $a_{2)}$ und $a_{3)}$ 100 Gew. -% ergeben muß, mit

b) einem oder mehreren Polyisocyanat(en) oder dessen (deren) Präpolymeren in solchen Mengen, daß einer Hydroxylgruppe des Polyols 0,9 bis 1,3 Isocyanatgruppen entsprechen,

hergestellt ist.

Die Polyolkomponente $a_{1)}$ besteht aus einem Polyether der allgemeinen Formel

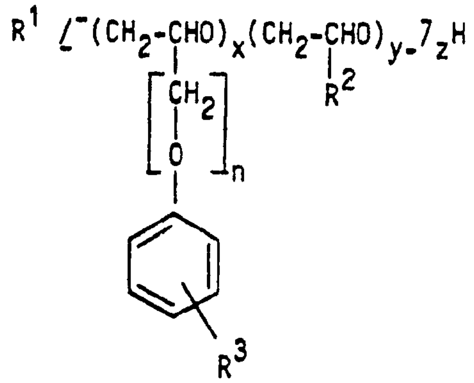

I

Bei der Polyolkomponente $a_{1)}$ handelt es sich um ein Anlagerungsprodukt von Styroloxid oder Phenylglycidylether, wobei beide Verbindungen Alkylreste mit 1 bis 4 Kohlenstoffatomen am Phenylrest aufweisen können, und Alkylenoxiden an einen 2-, 3- oder 4-wertigen Alkohol. Vorzugsweise handelt es sich um ein Anlagerungsprodukt des Styroloxids, des Phenylglycidylethers oder des Kresylglycidylethers. Als Startalkohol sind insbesondere Ethylenglykol, Propylenglykol, Butandiol-1,4, Hexandiol-1,6, Neopentylglykol, Glycerin, Trimethylolpropan und Pentaerythrit geeignet.

Als Alkylenoxide werden Ethylenoxid, Propylenoxid, Butylenoxid oder höhere Alkylenoxide mit bis zu 12 Kohlenstoffatomen für den Rest $R^2$ verwendet. Besonders bevorzugt ist Propylenoxid. Es können auch Gemische verschiedener Alkylenoxide angelagert werden. Der Gehalt an Oxyethyleneinheiten im Polyether der Formel I soll jedoch 60% des Alkylenoxidgemisches nicht überschreiten, um sicherzustellen, daß das ausgehärtete Klebmittel keine zu hohe Hydrophilie aufweist. Das Styroloxid bzw. der Phenylglycidylether oder deren Derivate und das Alkylenoxid bzw. Alkylenoxidgemisch können an den Startalkohol statistisch oder blockweise angelagert werden. Die statistische Anlagerung der Oxirane ist bevorzugt. Die anzulagernde Molmenge Styroloxid bzw. Phenylglycidylether und Alkylenoxid wird dabei durch die Bedingung definiert, daß das Molverhältnis Styroloxid bzw. Phenylglycidylether zu Alkylenoxid innerhalb der Grenzen 0,3 bis 2,5 liegt und das Molekulargewicht des Polyethers $a_{1)}$ 330 bis 900 beträgt.

Der Polyether $a_2$ entspricht ebenfalls der vorgenannten Formel I, mit der Maßgabe, daß als Startalkohol einer der vorgenannten 2- oder 3-wertigen Alkohole verwendet wird und das Styroloxyd bzw. der Phenylglycidylether oder deren Derivate und Alkylenoxid unter Einhaltung des Molverhältnisses von 0,3 bis 2,5 in solchen Mengen angelagert wird, daß das Molekulargewicht des Polyethers 950 bis 3000 beträgt.

Durch die Kombination der Polyether $a_{1)}$ und $a_{2)}$ wird erreicht, daß das härtbare Klebmittel auf Polystyroloberflächen gute Adhäsivität aufweist und die nach der Aushärtung erhaltene Klebfuge die gewünschte Festigkeit und Elastizität besitzt.

Es ist möglich, zusätzlich zu den Polyethern $a_{1)}$ und $a_{2)}$ der Polyolkomponente weitere an sich bekannte Polyole zuzumischen, die aber mit den Polyethern $a_{1)}$ und $a_{2)}$ verträglich, d.h. insbesondere gut mischbar sein müssen. Beispiele solcher Polyole sind Polyetherole, die durch Anlagerung von Propylenoxid oder Ethylenoxid und Propylenoxid an die obengenannten mehrwertigen Alkohole erhältlich sind. Sie weisen zweckmäßig ein Molekulargewicht von 400 bis 2500 auf.

Als Polyisocyanate können die im Handel befindlichen und zur Herstellung von derartigen Klebmitteln verwendeten Polyisocyanate eingesetzt werden. Besonders bevorzugt werden Polyisocyanate der allgemeinen Formel

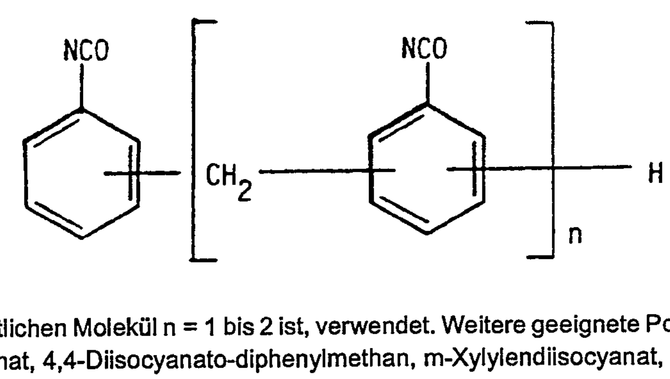

wobei im durchschnittlichen Molekül n = 1 bis 2 ist, verwendet. Weitere geeignete Polyisocyanate sind 2,4- und 2,6-Toluylendiisocyanat, 4,4-Diisocyanato-diphenylmethan, m-Xylylendiisocyanat, 3-Isocyanatomethyl-3,5,5-trimethylcyclohexylisocyanat, Naphthylen-1,5-diisocyanat oder 2,4,6-Triisocyanato-toluol.

Anstelle der reinen Polyisocyanate können auch deren partielle Umsetzungsprodukte mit niedermolekularen 2-wertigen Alkoholen oder Aminen verwendet werden. Beispiele solcher niedermolekularer 2-wertiger Alkohole oder Amine sind Ethylenglykol, Diethylenglykol, Propylenglykol, Butandiol-1,4 oder Ethylendiamin.

Das Verhältnis der Polyolkomponente zu der Polyisocyanatkomponente wird dabei so gewählt, daß einer Hydroxylgruppe der Polyolkomponente 0,9 bis 1,3 Isocyanatgruppen der Polyisocyanatkomponente entsprechen.

Die Aushärtungszeit bzw. Aushärtungstemperatur des Klebmittels kann in an sich bekannter Weise wesentlich durch Zusatz eines Beschleunigers verkürzt bzw. herabgesetzt werden. Besonders bevorzugt ist deshalb ein Klebmittel, welches als Beschleuniger bis zu 2 Gew.-%, bezogen auf die Summe der Polyolkomponente und des Polyisocyanats, eines tertiären Amins und/oder einer zinnorganischen Verbindung enthält. Als tertiäre Amine sind besonders Dimethylbenzylamin, Dicyclohexylmethylamin, Dimethylpiperazin, Dimethylaminoethänol, 1,2-Dimethylimidazol, N-Methyl- bzw. N-Ethyl-morpholin, Dimethylcyclohexylamin, 1-Aza-bicyclo-(3,3,0)-octan oder 1,4-Diaza-bicyclo-(2,2,2)-octan geeignet. Beispiele gut brauchbarer zinnorganischer Verbindungen sind Dibutylzinndilaurat oder Zinn(II)-octoat.

Als Hilfsstoffe kann man dem Klebmittel auch Pigmente und/oder Füllstoffe zusetzen. Hierfür sind sowohl anorganische als auch organische Produkte, wie z.B. Titandioxid, Eisenoxid, Chromoxid, Bariumsulfat, Quarzmehl, Talkum, Bentonit, geeignet.

Es ist ferner möglich, Trockenmittel, z.B. Zeolithe, der Polyolkomponente zuzusetzen, um beim Vermischen der Polyolkomponente mit der Polyisocyanatkomponente eine Reaktion etwa enthaltenden Wassers mit dem Isocyanat unter Aufschäumen zu verhindern.

Die folgenden Beispiele dienen der weiteren Erläuterung der Erfindung. Sie zeigen die Herstellung der erfindungsgemäßen Klebmittel sowie die klebtechnischen Eigenschaften.

Herstellung der Polyetherkomponenten $a_{1)}$ und $a_{2)}$ (nicht erfindungsgemäß)

## Beispiel 1

In einem Reaktor wird eine Mischung aus 360,4 g (4 Mol) Butandiol-1,4 und 22,4 g (0,4 Mol) Kaliumhydroxid durch Spülen mit Stickstoff von Sauerstoff befreit und bei 110 bis 115°C innerhalb von 8 Stunden mit einem Gemisch aus 1060 g (8,83 Mol) Styroloxid und 1280 g (22,1 Mol) Propylenoxid versetzt. Man läßt bei dieser Temperatur 3 Stunden nachreagieren und entfernt dann im Vakuum geringe Mengen nicht umgesetzter Monomerer. Man neutralisiert das Reaktionsgemisch mit 30 gew.-%iger, wäßriger Phosphorsäure, entfernt das Wasser im Vakuum und filtriert nach Zusatz von Filterhilfsmittel das Kaliumphosphat ab. Man erhält einen Polyether, der nachfolgend als Polyether I bezeichnet wird, mit folgenden Kenndaten :

| | | |
|---|---|---|
| Hydroxylzahl: | 184 | |
| Molekulargewicht: | 610 | (berechnet aus der Hydroxylzahl unter Annahme einer Funktionalität von 2) |
| Säurezahl: | 0,3 | |
| Dichte: | 1,06 | $g/cm^3$ |
| Viskosität: | 1020 | mPas bei 25°C |

## Beispiel 2

Wie in Beispiel 1 beschrieben, wird an eine Mischung aus 540,6 g (6 Mol) Butandiol-1,4 und 33,6 g (0,6 Mol) Kaliumhydroxid bei 112 bis 118°C innerhalb von 6 Stunden ein Gemisch aus 2380 g (19,8 Mol) Styroloxid und 580 g (10 Mol) Propylenoxid angelagert und nach einer Nachreaktion während 2 Stunden in gleicher Weise aufgearbeitet. Man erhält einen Polyether, der nachfolgend mit Polyether II bezeichnet wird, mit folgenden Kenndaten :

| | | |
|---|---|---|
| Hydroxylzahl: | 199 | |
| Molekulargewicht: | 564 | (berechnet aus der Hydroxylzahl unter Annahme einer Funktionalität von 2) |
| Säurezahl: | 0,5 | |
| Dichte: | 1,09 g/$cm^3$ | |
| Viskosität: | 23 000 | mPas bei 25°C |

Beispiel 3

Zu einer Mischung aus 90,1 g (1 Mol) Butandiol-1,4 und 28,5 g einer 50 gew.-%igen Bortrifluorid-etherat-Lösung in Diethylether wird innerhalb von 6 Stunden bei 25 bis 30°C ein Gemisch aus 900 g (7,5 Mol) Styroloxid und 435 g (7,5 Mol) Propylenoxid zudosiert. Man läßt bei 30°C 3 Stunden nachreagieren und entfernt dann im Vakuum geringe Mengen nicht umgesetzter Monomerer. Man stellt das Reaktionsgemisch mit 25 gew.-%iger, wäßriger Natronlauge schwach alkalisch und neutralisiert mit 30 gew.-%iger, wäßriger Phosphorsäure. Nach Entfernung des Wassers im Vakuum wird das erhaltene Salzgemisch unter Zusatz eines Filterhilfsmittels abfiltriert. Man erhält einen Polyether, der nachfolgend als Polyether III bezeichnet wird, mit folgenden Kenndaten:

| | | |
|---|---|---|
| Hydroxylzahl: | 90 | |
| Molekulargewicht: | 1247 | (berechnet aus der Hydroxylzahl unter Annahme einer Funktionalität von 2) |
| Säurezahl: | 0,8 | |
| Dichte: | 1,08 g/$cm^3$ | |
| Viskosität: | 23 000 | mPas bei 25°C |

Beispiel 4

Wie in Beispiel 1 beschrieben, wird an eine Mischung aus 165 g (1,83 Mol) Butandiol-1,4 und 10,3 g (0,18 Mol) Kaliumhydroxid bei 112 bis 118°C innerhalb von 6 Stunden ein Gemisch aus 739 g (4,93 Mol) Phenylglycidylether und 290 g (5,0 Mol) Propylenoxid angelagert und nach einer Nachreaktion während 2 Stunden in gleicher Weise aufgearbeitet. Man erhält einen Polyether, der nachfolgend mit Polyether IV bezeichnet wird, mit folgenden Kenndaten :

| | | |
|---|---|---|
| Hydroxylzahl: | 181 | |
| Molekulargewicht: | 620 | (berechnet aus der Hydroxylzahl unter Annahme einer Funktionalität von 2) |
| Säurezahl: | 0,2 | |
| Dichte: | 1,08 g/$cm^3$ | |
| Viskosität: | 2800 | mPas bei 25°C |

Beispiel 5

Wie in Beispiel 1 beschrieben, wird an eine Mischung aus 49,2 g (0,55 Mol) Butandiol-1,4 und 6,1 g (0,11 Mol) Kaliumhydroxid bei 112 bis 118°C innerhalb von 8 Stunden ein Gemisch aus 784 g (5,23 Mol) Phenylglycidylether und 304 g (5,24 Mol) Propylenoxid angelagert und nach einer Nachreaktion während 3 Stunden in gleicher Weise aufgearbeitet. Man erhält einen Polyether, der nachfolgend mit Polyether V bezeichnet wird, mit folgenden Kenndaten :

Hydroxylzahl: 67
Molekulargewicht: 1675 (berechnet aus der Hydroxylzahl unter Annahme einer Funktionalität von 2)
Säurezahl: 0,3
Dichte: 1,10 $g/cm^3$
Viskosität: 32 000 mPas bei 25°C

Herstellung und Eigenschaften der erfindungsgemäßen Klebstoffe

<u>Beispiel 6</u>

30 g Polyether I
20 g Polyether III
46 g Calciumcarbonat
4 g Zeolithpulver

werden homogen verrührt und mit 18,6 g eines handelsüblichen Polyisocyanats der angenäherten Formel

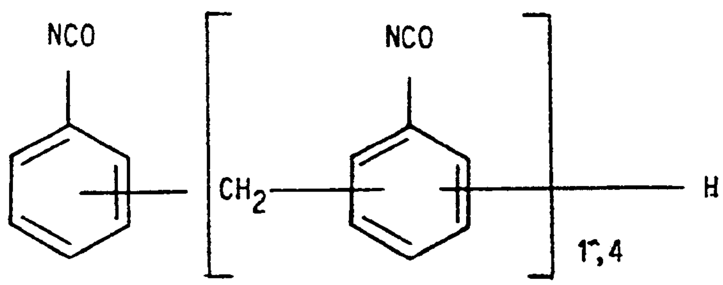

und einem Isocyanatgehalt von 31 Gew.-% vermischt. Der Klebstoff wird danach wie nachfolgend beschrieben verarbeitet.

<u>Beispiel 7</u>

20 g Polyether II
30 g Polyether III
46 g Calciumcarbonat
4 g Zeolithpulver

werden homogen verrührt und mit 16,9 g des in Beispiel 6 beschriebenen Polyisocyanats vermischt. Der Klebstoff wird sofort weiterverarbeitet.

Beispiel 8

30 g Polyether I
15 g Polyether III
5 g Polyether, erhalten durch Anlagerung von Propylen- und Ethylenoxid an Trimethylolpropan, mit einer Hydroxylzahl von 26,
46 g Calciumcarbonat
4 g Zeolithpulver

werden homogen verrührt und mit 17,8 g des in Beispiel 6 beschriebenen Polyilsocyanats vermischt. Der Klebstoff wird sofort weiterverarbeitet.

Beispiel 9

25 g Polyether IV
25 g Polyether V
46 g Calciumcarbonat
4 g Zeolithpulver

werden homogen verrührt und mit 15,8 g des in Beispiel 6 beschriebenen Polyisocyanats vermischt. Der Klebstoff wird sofort weilterverarbeitet.

Die Klebeigenschaften der in Beispiel 6 bis 9 hergestellten Klebstoffe werden am Beispiel der Verklebung von handelsüblichem schlagfestem Polystyrol mit einem Kautschukgehalt von 7,5 % gezeigt.

In Anlehnung an DIN 53 283 wird die Zugscherfestigkeit an Proben aus dem schlagfesten Polystyrol mit den Abmessungen 100 mm × 25 mm × 3 mm gemessen, Die Klebflächen von 25 mm × 12 mm werden zuvor mit Schmirgelpapier aufgerauht. Die Klebstoffe werden auf beide Probenkörper aufgetragen. Die Klebschichtdicke beträgt ca. 0,3 mm. Die Zugscherfestigkeit wird bei 23°C nach Härtung des Klebstoffs während 7 Tagen bei Raumtemperatur gemessen. Des weiteren wird die Rollenschälfestigkeit in Anlehnung an DIN 53 289 des Verbundes

| | |
|---|---|
| Aluminium: Al Cu Mg 2 pl | (Dicke 0,5 mm), gebeizt mit Chromat-Schwefelsäure, |
| Klebstoff: | Dicke ca. 0,4 mm |
| schlagfestes Polystyrol: | aufgerauht mit Schmirgelpapier |
| Klebfläche: | 185 mm x 30 mm |

ebenfalls bei 23°C und nach Härtung des Klebstoffs während 7 Tagen bei Raumtemperatur gemessen.

Die Festigkeitswerte sind in Tabelle 1 enthalten.

Zum Vergleich sind Klebstoffe aufgeführt, die bei gleichem Verhältnis von Hydroxyl- zu Isocyanatgruppen anstelle der erfindungsgemäßen Polyolgemische

10) nur Polyether I

11) nur Polyether III

12) ein Gemisch aus : 60 Gew.-% eines Polyetherdiols mit einer Hydroxylzahl von 200 und 40 Gew.-% eines Polyetherdiols mit einer Hydroxylzahl von 95, beide erhalten durch Anlagerung von Propylenoxid an Butandiol-1,4,

enthalten.

Man erkennt, daß die erfindungsgemäßen Klebstoffe überlegene Klebfestigkeitswerte zeigen.

Tabelle 1 Klebfestigkeitswerte

| Klebstoff | Zugscherfestigkeit $N/mm^2$ | Rollenschälfestigkeit N/mm |
|---|---|---|
| a) erfindungsgemäß | | |
| Beispiel 6 | 3,7 Materialbruch | 1,5 |
| Beispiel 7 | 3,8 Materialbruch | 1,5 |
| Beispiel 8 | 3,6 Materialbruch | 1,4 |
| Beispiel 9 | 4,0 Materialbruch | 2,6 |
| b) Vergleichsklebstoffe nicht erfindungsgemäß | | |
| 10) | 2,5 | 0,4 |
| 11) | 2,1 | 0,6 |
| 12) | < 0,5 keine Haftung | < 0,2 keine Haftung |

## Patentansprüche

1. Härtbares Klebmittel auf Polyol/Polyisocyanatbasis, welches gegebenenfalls übliche Zusatzstoffe enthält, dadurch gekennzeichnet, daß es durch Vermischen einer Polyolkomponente, bestehend aus
$a_{1)}$ 10 bis 80 Gew.-% Polyether der allgemeinen Formel

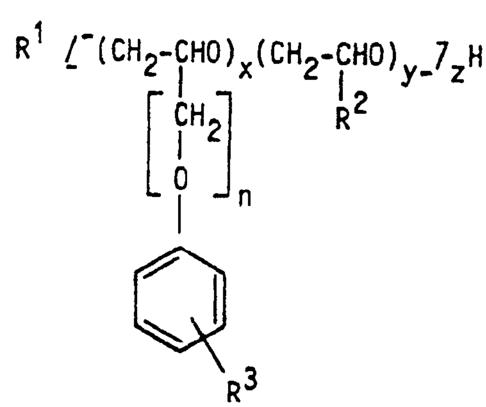

wobei $R^1$ ein z-wertiger Alkoxyrest, $R^2$ ein Wasserstoff- oder Alkylrest mit bis zu 12 Kohlenstoffatomen, $R^3$ ein Wasserstoff-oder Alkylrest mit 1 bis 4 Kohlenstoffatomen, n = 0 oder 1, z = 2, 3 oder 4, x, y ganze Zahlen ≧ 1, mit der Maßgabe, daß x : y = 0,3 bis 2,5 und das Molekulargewicht des Polyethers 330 bis 900 beträgt,
$a_{2)}$ 20 bis 90 Gew.-% Polyether der vorgenannten Formel, wobei z = 2 oder 3 ist und das Molekulargewicht des Polyethers 950 bis 3000 beträgt, und gegebenenfalls
$a_{3)}$ bis zu 60 Gew.-% an sich bekannter, mit den Polyethern $a_{1)}$ und $a_{2)}$ mischbarer Polyole, wobei die Summe

von $a_{1)}$, $a_{2)}$ und $a_{3)}$ 100 Gew.-% ergeben muß, mit

b) einem oder mehreren Polyisocyanat(en) oder dessen (deren) Präpolymeren mit 2-wertigen Alkoholen oder Aminen in solchen Mengen, daß einer Hydroxylgruppe des Polyols 0,9 bis 1,3 Isocyanatgruppen entsprechen, hergestellt ist.

2. Klebmittel nach Anspruch 1, dadurch gekennzeichnet, daß $R^2$ ein Alkylrest mit 1 oder 2 Kohlenstoffatomen ist.

3. Klebmittel nach Anspruch 1 oder 2, dadurch gekennzeichnet, daß $R^3$ ein Wasserstoff- oder Methylrest ist.

4. Klebmittel nach Anspruch 1, 2 oder 3, dadurch gekennzeichnet, daß es ein Polyisocyanat der allgemeinen Formel

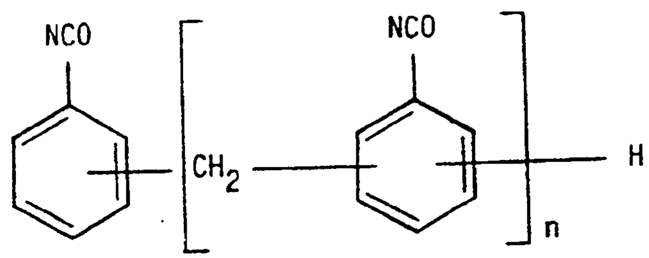

wobei im durchschnittlichen Molekül n = 1 bis 2 ist, oder deren Präpolymeres ist, enthält.

## Claims

1. Curable polyol/polyisocyanate-based adhesive optionally containing conventional additives, characterised in that it is prepared by mixing a polyol component comprising

$a_{1)}$ 10 to 80% by weight of a polyether of the general formula

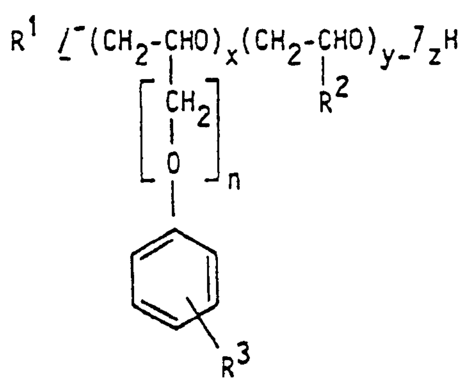

where $R^1$ is a z-valent alkoxy radical, $R^2$ is a hydrogen or alkyl radical having up to 12 carbon atoms, $R^3$ is a hydrogen or alkyl radical having 1 to 4 carbon atoms, n = 0 or 1, z = 2, 3 or 4, x, y are integers ≥ 1, with the proviso that x : y = 0.3 to 2.5, and the molecular weight of the polyether is 330 to 900,

$a_{2)}$ 20 to 90% by weight of the polyether of the abovementioned formula, where z = 2 or 3, and the molecular weight of the polyether is 950 to 3000, and, if desired,

$a_{3)}$ up to 60% by weight of polyols which are known per se and are miscible with the polyethers $a_{1)}$ and $a_{2)}$, where the sum of $a_{1)}$, $a_2$ and $a_{3)}$, must give 100% by weight, with

b) one or more polyisocyanate(s) or prepolymers thereof with dihydric alcohols or diamines, in such amounts that 0.9 to 1.3 isocyanate groups correspond to a hydroxyl group of the polyol.

2. Adhesive according to Claim 1, characterised in that $R^2$ is an alkyl radical having 1 or 2 carbon atoms.

3. Adhesive according to Claim 1 or 2, characterised in that $R^3$ is a hydrogen or methyl radical.

4. Adhesive according to Claim 1, 2 or 3, characterised in that it contains a polyisocyanate of the general formula

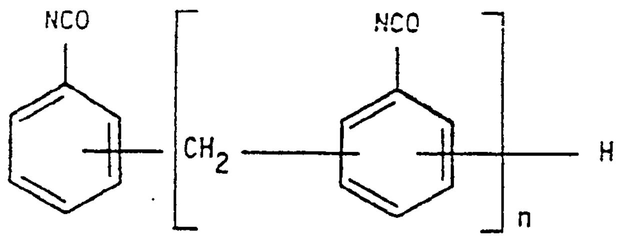

where, in the average molecule, n = 1 to 2, or is a prepolymer thereof.

## Revendications

1. Adhésif durcissable à base de polyol/polyisocyanate, qui contient éventuellement des adjuvants usuels, caractérisé en ce qu'on le prépare en mélangeant un composant polyol, composé de
$a_{1)}$ 10 à 80 % en poids d'un polyéther de formule générale :

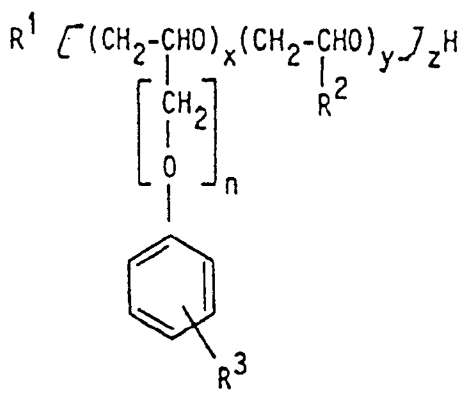

dans laquelle $R^1$ représente un radical alcoxy de valence z, $R^2$ représente un radical hydrogène ou un radical alkyle ayant jusqu'à 12 atomes de carbone, $R^3$ représente un radical hydrogène ou un radical alkyle ayant de 1 à 4 atomes de carbone, n = 0 ou 1, z = 2, 3 ou 4, x et y représentent des nombres entiers ≥ 1, la condition étant que le rapport x/y = 0,3 à 2,5 et que la masse moléculaire du polyéther soit comprise entre 330 et 900,
$a_{2)}$ 20 à 90% en poids d'un polyéther de la formule susmentionnée, dans laquelle z = 2 ou 3, et la masse moléculaire du polyéther est comprise entre 950 et 3.000, et éventuellement
$a_{3)}$ jusqu'à 60% en poids de polyols connus, miscibles avec les polyéthers $a_{1)}$ et $a_{2)}$, la somme de $a_{1)}$, $a_{2)}$ et $a_{3)}$ devant donner 100% en poids, avec
b) un ou plusieurs polyisocyanate(s) ou leur(s) prépolymère(s) contenant des alcools bivalents ou des amines, en quantités telles que 0,9 à 1,3 groupes isocyanates équivalent à un groupe hydroxyle du polyol.

2. Adhésif selon la revendication 1, caractérisé en ce que $R^2$ représente un radical alkyle ayant 1 ou 2 atomes de carbone.

3. Adhésif selon la revendication 1 ou 2, caractérisé en ce que $R^3$ représente un radical hydrogène ou méthyle.

4. Adhésif selon la revendication 1, 2 ou 3, caractérisé en ce qu'il contient un polyisocyanate de formule générale :

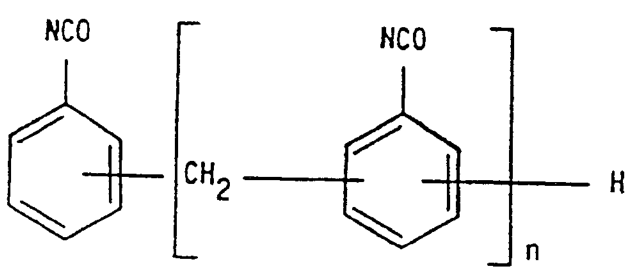

dans laquelle, dans la molécule moyenne, n = 1 à 2, ou représente son prépolymère.